# EUROPEAN PATENT SPECIFICATION

(11) **EP 3 311 056 B1**
(45) Date of publication and mention of the grant of the patent: **13.05.2020**
(21) Application number: 16744523.8
(22) Date of filing: 15.06.2016
(51) Int. Cl.: F16L 19/065, F16L 25/06

(54) **A QUICK-FIT COUPLING**
SCHNELLKUPPLUNG
RACCORD RAPIDE

(30) Priority: 17.06.2015 IT UB20151463
(43) Date of publication of application: 25.04.2018
(73) Proprietor: Polo S.R.L., 23841 Annone di Brianza (LC) (IT)
(72) Inventor:
(74) Representative: PGA S.p.A.
(86) International application number: PCT/IB2016/053516
(87) International publication number: WO 2016/203380

(56) References cited:
- WO-A1-2007/136793
- US-A- 3 455 578
- US-A- 3 737 181
- US-A- 3 768 842

## Description

### Field of the invention

The present invention relates to a quick release coupling. In particular, the present invention relates to a device for quickly connecting a duct of a circuit traversed by a fluid to a male threaded or smooth fitting. The invention is in the field of quick release couplings able to carry out in a quick and secure manner the operations of connecting and disconnecting two different ducts traversed by fluids, avoiding the burdensome manual tightening operations that would require the use of wrenches or other tools and assuring both the mechanical seal and the hermetic seal. Use of such quick release couplings becomes necessary, for example but not exclusively, when functional tests are conducted on products that require connection to pneumatic / hydraulic / water circuits (e.g.: boilers, radiators, motors, pumps, hydraulic/pneumatic cylinders, valves, etc.). In particular, the device of the present invention is suitable for a very broad range of uses, in which pressure and operating flow rate can vary from negative values (presence of vacuum) to very high values.

### Background art

Quick release couplings are known, which can be operated manually in "push-pull" mode, for which the connection step is carried out by gripping an outer ring of the coupling and pushing the coupling against the fitting to which it is to be connected, until the fitting is engaged and held mechanically and the disconnection step is carried out by acting on the aforementioned outer ring again.

For example, the prior art document EP 1876381 describes a quick coupling for threaded fittings. One end of the coupling, intended for receiving the fitting, is provided with an annular body formed by a plurality of annular segments, elastically coupled to each other by means of an elastic ring and having, internally or externally depending on the type of fitting to be connected, a thread or shape configured to effect the connection to the fitting.

The known document WO 2013/175351 describes a rapid coupling for threaded or profiled terminal, comprising: a central body extending between an upper end removably connectable in a sealed manner with the terminal, and a lower end, connectable with a circuit; an engaging clamp associated to the central body and operable at least between a first configuration, in which it is not engaged to the terminal and enables the insertion and extraction of the central body into and from the terminal, and a second configuration, in which it is engaged to the terminal and connects the central body thereto; activating means movably active on the central body and/or on the engaging clamp such as to enable passage of the engaging clamp between the first and second configurations and, consequently, the coupling and decoupling of the central body to and from the terminal.

The Applicant has observed that known quick release couplings, like those described above, can be improved in several aspects, in particular with reference to the mechanical elements of those couplings, which come into direct contact with the fittings, and with reference to the systems for actuating said mechanical elements.

The Applicant has observed, for example, that the known annular segments of the document EP 187638, being actuated by means of a simple elastic ring, do not assure precise coupling with the terminal and can be subject to a deterioration of the performance over time.

The Applicant has also observed that the engaging clamp of the type described in WO 2013/175351 must necessarily have sufficiently long arms to provide the necessary radial opening/closing of its own ends and this does not assure a secure and precise engagement, nor does it make it possible to limit the longitudinal size of the coupling.

Also known are the documents WO2007/136793 and US3737181.

WO2007/136793 discloses a drilling riser pipe for offshore platforms provided with systems for the mutual connection between successive sections of said riser pipe. The connection system comprises two concentric split rings and pins able to reduce the diameter of the outer ring so it engages on the inner ring. This connection system in a riser of this kind is not a quick release coupling of the type of the invention.

US3737181 discloses a connecting device between tie rods used in particular for spacecraft. It comprises pins that act on ends of arms to close them radially. This device does not connect pipes through which a fluid flows and is not a quick release coupling of the type of the invention.

### Object of the invention

In this context, the Applicant's objective was to propose a quick release coupling that is qualitatively superior and possibly more economical and also more compact than those of the prior art.

The Applicant's objective was to propose a quick release coupling with small size. In addition, the Applicant's objective was to obtain a quick release coupling that is simpler in its structure than the quick release couplings of the prior art and at the same time is able to assure high performance and high reliability in use.

### Summary of the invention

The Applicant has found that said objectives and purposes can be achieved obtaining a quick release coupling in accordance with the present invention, of the type claimed in the appended claims and/or described in the following aspects.

In accordance with one aspect, the present invention relates to a quick release coupling for smooth or threaded fittings, which comprises:
- a tubular body which delimits internally a passage duct for a fluid and which has a first end configured to be connected to a circuit and a second end configured to be removably connected to a fitting,
- at least one clamp which is functionally engaged with the tubular body, said clamp operating between at least one first position of disengagement from the fitting in which it does not axially bind the fitting and a second position of coupling to the fitting in which it is tightened on, and axially binds the fitting to, the tubular body, said at least one clamp comprising an open annular element, in which said open annular element is radially elastically deformable and/or flexible,
- a plurality of thrust pins, each thrust pin operating in contact with a respective portion of the open annular element, the thrust pins being accommodated at respective radial seats of the tubular body and being configured to slide radially within said seats, the thrust pins being furthermore configured to cause the transition of the clamp between the first position and the second position, the transition of the clamp between the first position and the second position causing a radial compression of the open annular element,
- an activation device which is configured to operate on said plurality of thrust pins so as to cause the transition of the clamp between the first position and the second position.

The term "open annular element" means a split ring, i.e. a ring having a circumferential development of less than 360° to form a sort of "C".

The Applicant has verified that the clamp shaped as an open annular element is simple to engage to a fitting and assures its stable positioning within the quick release coupling. The stable positioning of the fitting to the clamp is made possible by the thrust pins, which operating on the open annular element manage its position. Use of the thrust pins is particularly advantageous in that they make it possible to manage the deformation of the open annular element and consequently the transition between the first position and the second position. Advantageously, the radial elastic deformability and/or flexibility of the open annular element also enables said open annular element easily to return from the second position to the first position when the thrust pins do not exert thrust thereon. In addition, the clamp is simple and economical to manufacture.

In one aspect, the open annular element is made of a metallic material, in particular steel.

The quick release coupling is configured to operate between a first configuration corresponding to the first position of disengagement from the fitting and a second configuration corresponding to the second position of coupling to the fitting.

Said activation device comprises a tapered thrust surface which extends circumferentially around the open annular element. Said activation device and the tubular body being configured to translate axially with respect to each other. Said translation causes the axial translation of the thrust surface on the thrust pins, the sliding of the thrust pins within said seats, and the transition of the clamp from the first position to the second position.

The thrust pins slide within the seats in an incoming direction with respect to the open annular element.

In one aspect, the thrust pins have a contoured end, in particular having an at least partially curvilinear and/or rounded and/or tapered shape.

In one aspect, the thrust pins have a tapered or rounded end, said end being in contact with said thrust surface both in the first and in the second position of the clamp and being configured to translate axially along said thrust surface. The tapered or rounded end enables an easy and linear translation of the thrust pins on the thrust surface. In other words, the thrust pins translate in contact with the thrust surface without jerking movements or sudden movements.

In one aspect, there are at least three thrust pins. Providing at least three thrust pins is advantageous in that it enables a homogeneous distribution of the clamping force which the open annular element, through the action that the thrust pins operates thereon, transmits to the fitting.

In one aspect, the thrust pins operate in contact with a respective outer portion of the open annular element.

In one aspect, the thrust pins are configured to compress the open annular element radially.

In one aspect, the thrust surface is substantially frustoconical.

In one aspect, the thrust surface develops about a main axis.

In one aspect, the tapered thrust surface defines a narrowing of an internal cavity of the second part of the activation device.

In one aspect, the tubular body comprises a first and a second portion. Preferably, the quick release coupling also comprises a gasket, in particular an O-ring. In the second position of the clamp the first and the second portion of the tubular body are brought close together and cause an axial compression of the gasket and a radial contraction of the gasket against an outer surface of the fitting. Use of the gasket is particularly advantageous in that it determines the seal and it contributes to assure the stable positioning of the fitting within the tubular body.

In one aspect, the thrust pins of the plurality of thrust pins are angularly equidistant around the open annular element. Providing an equal angular distance between the thrust pins enables a homogeneous deformation of the open annular element, which can then act with a clamping force that is equally distributed around the fitting.

In one aspect, said activation device comprises a first and a second part. The second part of the activation device comprises said thrust surface. The second part of the activation device and the tubular body are configured to translate axially with respect to each other. The first and the second part of the activation device are coupled and are configured to be moved with respect to each other by screwing or unscrewing. The relative movement between the first and the second part of the activation device causes the sliding of the thrust pins along the thrust surface and the transition of the clamp between the first and the second position or vice versa.

In one aspect, the tubular body comprises a first and a second portion. The first part of the activation device is engaged at least with the first portion of the tubular body and the second part of the activation device is engaged at least with the second portion of the tubular body.

In one aspect, the quick release coupling also comprises stroke limiting elements configured to prevent the axial disengagement of the activation device and/or of at least one portion of the tubular body.

In one aspect, the first and the second portion of the tubular body present respective stroke limiting elements configured to prevent the axial disengagement of the activation device and/or of at least one of its first or second part.

In one aspect, the quick release coupling comprises an elastic element, such as a second spring, operating between a first part of the activation device and a first portion of the tubular body. Said elastic element exerts a thrust force on the first portion of the tubular body in order to push it in the direction of a second portion of the tubular body.

In one aspect, the tubular body (in particular the second portion of the tubular body) comprises an annular seat for the annular element. In the first position the annular element is in contact with an inner surface of said annular seat, in the second position the annular element is distanced from said inner surface of the annular seat. The annular seat enables an easy positioning of the annular element at the tubular body. In addition, housing the annular element at the annular seat increases the compactness of the quick release coupling, contributing to the containment of its overall dimensions.

In one aspect, the annular element is axially locked between an abutment element and an abutment wall of said annular seat defined in an axially external position with respect to the clamp.

In one aspect, the abutment element is engaged internally with the second portion of the tubular body.

In one aspect, the annular element is internally threaded and is configured to be engaged with a threaded fitting. The threads of the annular element and of the terminal increase the stability of the engagement of the fitting to the quick release coupling.

In one aspect, the annular element is internally knurled and is configured to be engaged with a smooth fitting.

In one aspect, the annular element comprises a plurality of serrations configured to grip the fitting.

In one aspect, the open annular element comprises ends that face each other and are mutually distanced, in the first position of the clamp, by a first distance. Said first distance being smaller than a diameter of the thrust pins to prevent the entry of the thrust pins between said mutually facing ends. In this way, the thrust pins are prevented from coming into direct contact with the fitting.

In one aspect, the open annular element comprises mutually facing ends, in the first position of the clamp the ends of the annular element being mutually distanced, while in the second position of the clamp the ends of the annular element being mutually approached.

In one aspect, in the first position of the clamp the annular element presents a first distance between mutually facing ends, in the second position of the clamp the annular element presenting a smaller second distance between mutually facing ends than the first distance.

In one aspect, the quick release coupling comprises a washer engaged within the duct of a first portion of the tubular body, the washer being configured to provide an abutment to a head of the fitting.

In one aspect, the quick release coupling comprises an additional elastic element, such as a first spring, exerting a thrust force on the washer to push it in the direction of a second portion of the tubular body.

In one aspect, said additional elastic element is positioned between the first portion of the tubular body and the washer.

In one aspect, the washer is slidably engaged with the first portion of the tubular body. Being slidably engaged with the first portion of the tubular body, the washer can translate axially within the first portion.

In one aspect, the quick release coupling comprises an abutment element positioned between the first portion and the second portion of the tubular body and a gasket, in particular an O-ring, said gasket being positioned between the first portion of the tubular body and the abutment element.

In one aspect, the tubular body is at least partially positioned within the activation device.

In one aspect, a first portion of the tubular body is housed within a first part of the activation device.

In one aspect, the first portion of the tubular body and the first part of the activation device are configured to be moved with respect to each other.

In one aspect, the first part of the activation device is configured to rotate at least partially with respect to the first portion of the tubular body and/or with respect to the second portion of the tubular body.

In one aspect, a second portion of the tubular body is housed within a second part of the activation device.

In one aspect, the second portion of the tubular body and the second part of the activation device are configured to be moved with respect to each other.

In one aspect, the second part of the activation device is configured to rotate at least partially with respect to the first portion of the tubular body and/or with respect to the second portion of the tubular body.

In one aspect, the second part of the activation device and the thrust pins are configured to translate relatively.

In one aspect, the thrust pins are configured to translate axially integrally with the second portion of the tubular body.

In one aspect, the thrust pins are configured to translate axially along the thrust surface and to slide radially during the translation movement, causing the transition of the clamp between the first position and the second position.

In one aspect, the first and the second portion of the activation device are threaded and are configured to be moved with respect to each other.

In one aspect, the first and the second portion of the activation device comprise respective threaded portions and are configured to be screwed to each other.

Advantageously, the actuation of the first and of the second part of the tubular body controls the relative translation or sliding between thrust surface and thrust pins and the transition of the clamp between the first position and the second position.

In one aspect, the first and the second part of the activation device are able to be moved manually with respect to each other.

In accordance with one aspect, the present invention relates to a method for making a quick release coupling according to one or more of the previous aspects and/or of the appended claims, wherein the method comprises:
- making an open annular element,
- mounting the open annular element at an annular seat of the tubular body,
- mounting the thrust pins at radial seats of the tubular body, in particular in contact with the annular element,
- mating an activation device to the tubular body.

In one aspect, the method comprises:
- engaging a first part of the activation device with a first portion of the tubular body,
- engaging a second part of the activation device with a second portion of the tubular body,
- coupling, in particular screwing, the first part of the activation device to the second part of the activation device.

In one aspect, the first and the second part of the activation device are coupled in such a way as to enable, by action on the first and/or on the second part of the activation device, the transition of the clamp between the first position and the second position.

In one aspect, engaging a first part of the activation device with a first portion of the tubular body comprises housing the first portion of the tubular body within the first part of the activation device.

In one aspect, engaging a second part of the activation device with a second portion of the tubular body comprises housing the second portion of the tubular body within the second part of the activation device.

In accordance with one aspect, the present invention relates to a method for locking a quick release coupling, comprising:
- arranging a quick release coupling in accordance with one or more of the previous aspects and/or of the appended claims,
- locking said annular element on the fitting.

In one aspect, locking said annular element on the fitting comprises radially compressing the annular element on the fitting.

In one aspect, locking said annular element on the fitting comprises causing the radial sliding of the thrust pins within the radial seats, said radial sliding entailing the radial compression of the annular element on the fitting.

In one aspect, locking said annular element on the fitting comprises screwing the first part of the activation device to the second part of the activation device.

### Brief description of the drawings

Additional features and advantages will become more readily apparent from the detailed description of a preferred, but not exclusive embodiment of a quick release coupling according to the present invention.

The description shall be provided below with reference to the accompanying drawings, providing solely by way of non-limiting indication, in which:

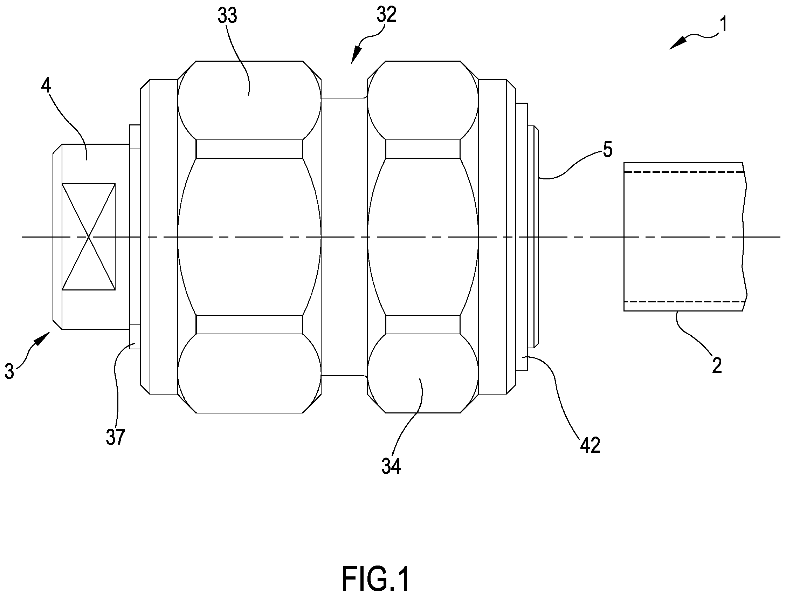

- Figure 1 shows a lateral view of the quick release coupling according to the present invention;
- Figure 2 shows a section of the quick release coupling of Figure 1 in a first configuration in which the fitting is disengaged from the quick release coupling;
- Figure 2a is a front view of some elements of the quick release coupling in the first configuration;
- figure 3 is a section of the quick release coupling in an intermediate configuration in which the fitting is within the tubular body;
- Figure 3a is a front view of some elements of the quick release coupling in the intermediate configuration;
- figure 4 is a section of the quick release coupling in a second configuration in which the fitting is stably engaged within the tubular body;
- Figure 4a is a front view of some elements of the quick release coupling in the second configuration;

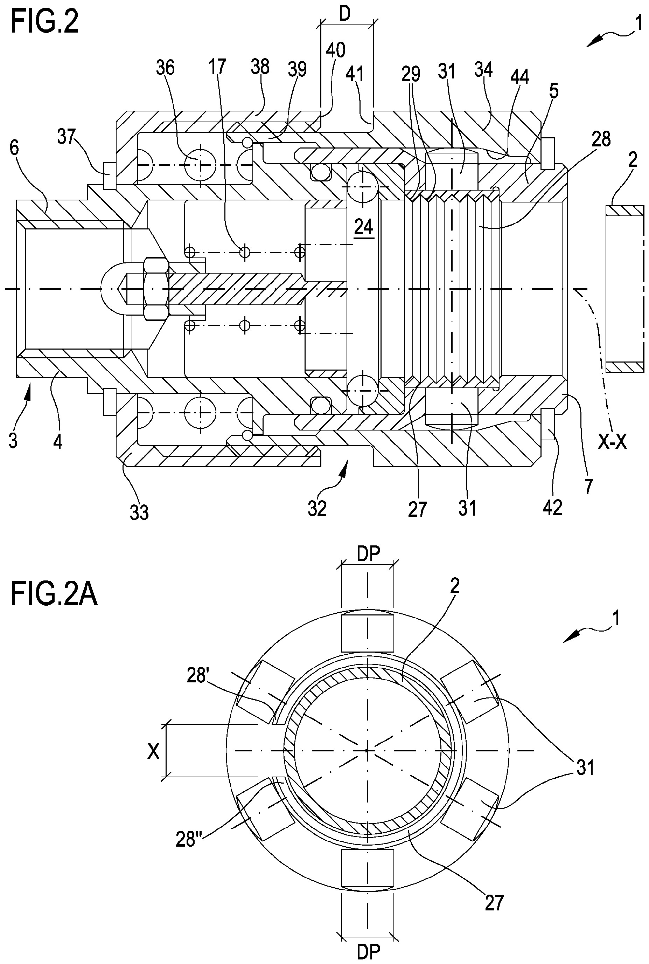

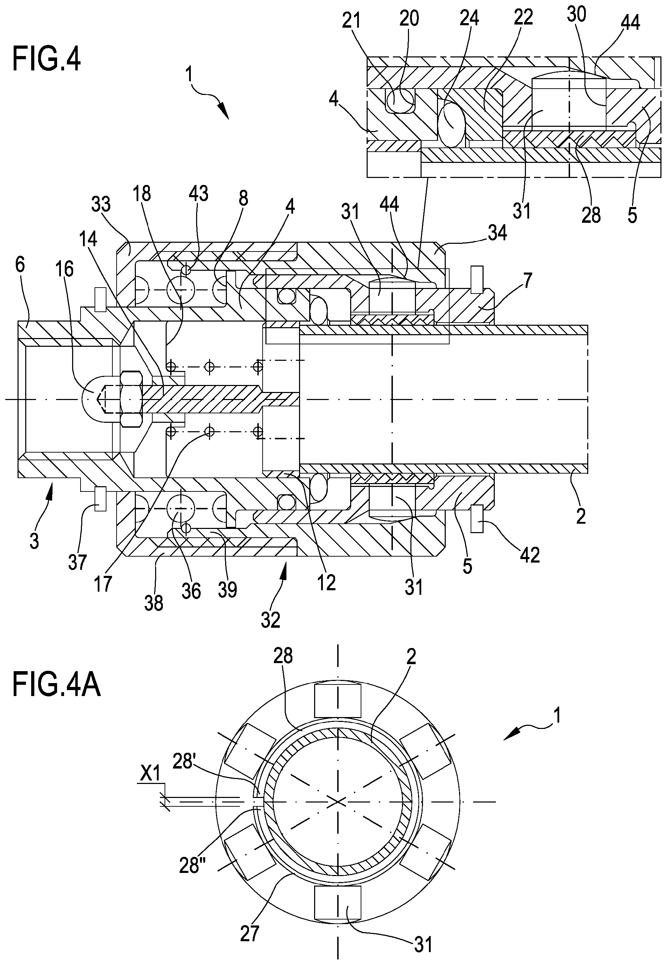

With reference to the figures, the reference number 1 indicates, in its entirety, a quick release coupling for smooth or threaded fittings. In the accompanying figures, an embodiment is shown in which the quick release coupling 1 is configured to be engaged with a smooth terminal 2. The quick release coupling 1 is configured to operate between a first configuration in which it is disengaged from a fitting 2 (for example, see Figure 2) and a second configuration in cui it axially binds the fitting 2 (for example, see Figure 4). The quick release coupling 1 develops about a main axis X-X.

The quick release coupling 1 comprises a tubular body 3 defined by a first and a second portion 4, 5 which are mutually engaged. Preferably, as shown in the accompanying figure, the first and the second portion 4, 5 consist of two distinct pieces. The first and the second portion 4, 5 of the tubular body 2 in turn substantially consist of two tubular bodies intended to be engaged with each other. The first and the second portion 4, 5 can be made of AISI 303 steel.

The tubular body 3 further comprises a first end 6 (defined at the first portion 4) and a second end 7 (defined at the second portion 5). The first end 6 is configured to connect to a pipe of a circuit (not shown in the accompanying figures), e.g. by screwing. The second end 7 is configured to be removably connected to the fitting 2.

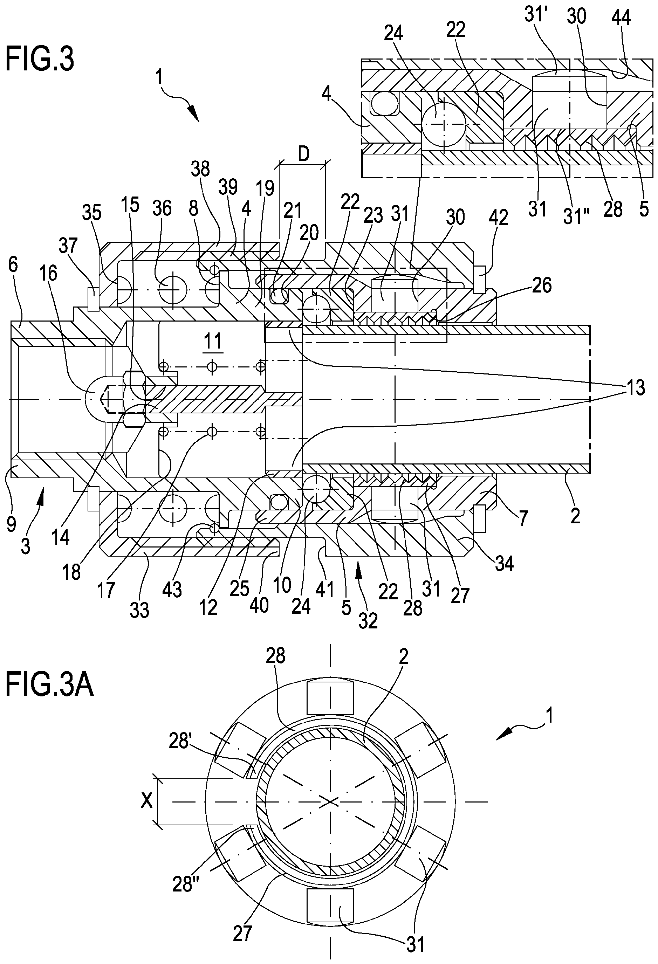

The first portion 4 of the tubular body 3 has a development of a solid obtained by revolution about the main axis X-X and comprises, at an outer surface, a wall 8 emerging from said surface. The first portion 4 has respective ends 9, 10 (figure 3), which are configured to connect respectively with a circuit (first end of the tubular body) and with an end or collar of the second portion 5.

The first portion 4 of the tubular body 3 has a through opening delimiting at least partially a passage duct 11, within which is housed a washer 12. The washer 12 provides an abutment for the terminal 2. The washer 12 comprises a body provided with a plurality of openings 13. The openings 13 define, together with the through opening of the first portion 4 of the tubular body 3, a passage duct 11 for the fluid traversing the quick release coupling 1. The washer 12 further comprises a pin 14 engaged to the first portion 4 of the tubular body 3. The pin 14 traverses the first portion 4 at a through seat 15 and is engaged with the first portion 4 in such a way as to be able to translate axially with respect thereto. The translation of the pin 14 causes the translation of the washer 12. The translation of the washer 12 is limited by a threaded nut 16, which is engaged to the pin 14 at a threaded end thereof. Figure 3 and Figure 4 show two different positions of the washer 12. In Figure 3, the washer 12 is in an advanced position in which the nut 16 is in contact with the first portion 4 about the through seat 15 and prevents the further axial advance of the pin 14, while in Figure 4 the washer 12 is in a backward position and the nut 16 is not in contact with the first portion 4. As shown in Figure 2-4, a first spring 17 acts between the washer 12 and the first portion 4. The first spring 17 operates between an abutment surface 18 of the first portion 4 defined about the through seat 15 and the washer 12 itself. In the configuration in which the fitting 2 is mounted to the quick release coupling 1, the first spring 17 acts on the washer 12 with an elastic force tending to push the washer 12 against the fitting 2.

The first portion 4 of the tubular body 3 has a collar 19 whereat is defined a cavity 20 housing an O-ring 21, which is configured to assure the seal between the first and the second portion 4, 5 of the tubular body 3. As shown in Figures 2-4, the collar 19 of the first portion 4 is engaged within a collar of the second portion 5. Between the first and the second portion 4, 5 of the tubular body 3 is defined an abutment element 22, which abuts against an abutment wall 23 of the second portion 5. The abutment element 22 bears a gasket 24, which constitutes the main sealing element of the quick release coupling 1. As will be shown in greater detail below, in the second configuration of the quick release coupling 1 (see Figure 4), the gasket 24 operates in contact with the fitting 2 externally thereto.

As stated previously, the first portion 4 is engaged with the second portion 5 of the tubular body 3. The second portion 5 in turn has a development as a solid obtained by revolution about the main axis X-X. The second portion 5 also has a collar 25 engaged externally relative to the collar 19 of the first portion 4. Said collars 19, 25 are arranged in such a way as to be able to slide axially with respect to each other.

The second portion 5 of the tubular body 3 also has an annular seat 26 whereat is housed a clamp 27. Preferably, the abutment wall 23 whereat the abutment element 22 abuts, is defined by the annular seat 26 itself. The clamp 27 consist of an open annular element 28 made of metallic material, in particular steel. Preferably, the open annular element 28 is made of steel AISI 303. The open annular element 28 is free to rotate within the annular seat 26. The open annular element 28 is configured to come into abutment, in the second configuration of the quick release coupling 1, at an external surface of the fitting 2. According to the embodiment shown in the accompanying figures, the open annular element 28 is internally knurled and is configured to be stably engaged with smooth fittings. Preferably, the knurling is of the type with parallel lines. As shown in Figure 2, the knurled open annular element 28 comprises a plurality of serrations 29 intended to grip the smooth fitting 2, in such a way as to enhance the stability of the engagement between annular element 28 and fitting 2. Alternatively, according to an embodiment that is not shown in the accompanying figures, the open annular element 28 can be internally threaded and hence be configured to be stably engaged with threaded fittings.

The open annular element 28 is radially elastically deformable and, in particular, it is radially compressible. The open annular element 28 substantially consists of an annular element presenting a slit. At the end, two mutually facing ends 28', 28" of the annular element 28 are defined. The open annular element 28 operates between two positions: a position in which the ends 28', 28" are distanced by a first distance X (corresponding to the first configuration of the quick release coupling 1 and to the first position of the clamp 27 which will be described in detail below) and another position (corresponding to the second configuration of the quick release coupling 1 and to the second position of the clamp 27 which will be described in detail below) in which the ends 28', 28" are distanced by a second distance X1, smaller than the first distance X. In other words, in the second configuration of the quick release coupling 1 the ends 28', 28" of the annular element 28 are closer to each other than they are in the position they assume in the first configuration.

As shown in the accompanying figures, the second portion 5 of the tubular body 3 has through radial seats 30, which open at the annular seat 26. The radial seats 30 are angularly equidistant along the circumferential development of the second portion 5 of the tubular body 3.

Within the radial seats 30 are housed respective thrust pins 31. Preferably, each radial seat 30 houses a single thrust pin 31. The thrust pins 31 are configured to slide radially within the radial seats 30. The sliding of the thrust pins 31 is controlled by the operation of an activation device 32, as is described in greater detail below. The thrust pins 31 have a rounded or tapered end 31' operating in contact with a thrust surface of the activation device 32 and a substantially flat end 31" operating in contact with the open annular element 28.

The thrust pins 31 have a slightly smaller diameter DP than a diameter of the radial seats 30 in such a way as to be able to slide radially within the radial seats 30 themselves and at the same time not to be able to translate laterally. The diameter DP of the thrust pins 31 is also greater than the first distance X between the ends 28', 28" of the open annular element 28 in such a way that the thrust pins 31 cannot enter the slit of the annular element 28, e.g. as a result of a rotation of the open annular element 28 relative to the annular seat 26.

The clamp 27, and hence the open annular element 28, operates between a first disengagement position (see Figure 2) in which it does not bind the fitting 2 to the quick release coupling 1 and a second position of coupling (see Figure 4) in which it binds the fitting 2 in engagement within the quick release coupling 1. In both positions, the thrust pins 31 operate in contact with the annular element 28 externally with respect thereto.

The quick release couplings 1 further comprises an activation device 32, positioned externally relative to the tubular body 3. The activation device 32 comprises a first and a second part 33, 34. The first and the second part 33, 34 consist of distinct, internally hollow pieces. As shown in the accompanying figures, the first part 33 is positioned around the first portion 4 of the tubular body 3 and has a wall 35 facing the wall 8 of the first portion 4. Between said walls 8, 35 is positioned a second spring 36 (or compensation spring), which exerts a thrust force on the first portion 4. The thrust force tends to approach the first portion 4 to the second portion 5. The first part 33 of the activation device 32 can translate axially relative to the first portion 4 of the tubular body 3. The axial translation of the first part 33 is visible, for example, from the comparison between Figure 3 and Figure 4. However, the first part 33 cannot translate freely. The axial displacement of the first part 33 is limited by a first stroke limiting element 37, consisting for example of a Seeger ring. The first stroke limiting element 37 can, for example, be made of stainless steel.

The first part 33 of the activation device 32 has a threaded portion 38, which is engaged with a corresponding threaded portion 39 of the second part 34. In proximity to the threaded portions 38, 39 are defined respective engagement edges 40, 41 of the first and of the second part 33, 34. In the second configuration of the quick release couplings 1, the engagement edges 40, 41 abut with each other.

As shown in the accompanying figures, the second part 34 of the activation device 32 is engaged around the second portion 5 of the tubular body 3. The second part 34 of the activation device 32 can translate axially with respect to the second portion 5 of the tubular body 3. The axial translation of the second part 34 is visible for example from the comparison between Figure 3 and Figure 4. However, the second part 34 cannot translate freely; the axial displacement of the second part 34 is limited by a second stroke limiting element 42, consisting for example of a Seeger ring. The second stroke limiting element 42 can, for example, be made of stainless steel.

The second part 34 further comprises a third stroke limiting element 43, consisting for example of an elastic ring, which prevents the first portion 4 from being axially extracted from the first part 34.

The second part 34 of the activation device 32 further comprises a tapered thrust surface 44, which operates in contact with the thrust pins 31 at least in the second configuration of the quick release coupling 1. The tapering of the thrust surface 44 defines a narrowing of the inner cavity of the second part 34. The thrust surface 44 develops circumferentially about the main axis X-X and has a substantially frustoconical conformation. The transition from the first configuration to the second configuration of the quick release coupling 1 and vice versa (and hence from the first position of the clamp 27 to the second position of the clamp 27) is carried out modulating the mutual positioning between thrust pins 31 and thrust surface 44, as will be seen in greater detail below.

The present invention also relates to a method for making a quick release coupling 1 of the type described above. The method comprises making an open annular element 28 of the type described above. The open annular element 28 can be made, for example, starting from a closed annular element, which is cut in such a way as to create the slit of the open annular element 28. The open annular element 28 is then mounted at an annular seat 26 of the tubular body 3. In particular, said annular seat 26 is defined at the second portion 5 of the tubular body 3. The thrust pins 31 are then mounted at the radial seats 30 of the tubular body 3, and in contact with the annular element 28. At this point, the activation device 32 is mated around the tubular body 3. As stated previously, the activation device 32 comprises a first and a second part 33, 34. The mating of the activation device 32 to the tubular body 3 comprises the engagement of the first part 33 around the first portion 4 of the tubular body 3 and of the second part 34 around the second portion 5 of the tubular body 3. The mating of the activation device 32 to the tubular body 3 further comprises the engagement of the first and of the second part 33, 34 with each other. The engagement between the first and the second part 33, 34 is configured to actuate the first part 33 of the activation device 32 with respect to the second part 34, in such a way as to determine the transition from the first to the second configuration of the quick release coupling 1, and vice versa. According to the embodiment shown in the accompanying figures, the engagement between the first and the second part of the activation device is obtained by means of threaded portions 38, 39, which enable the first and the second part 33, 34 to be screwed or unscrewed to each other. However, other alternative types of engagement to the threaded portions 38, 39, able to allow the mutual movement of the first and of the second part 33, 34, are not excluded. Prior to the engagement of the fitting 2 to the quick release couplings 1, the starting configuration of the quick release coupling 1 is the one shown in Figure 2. In this configuration, the engagement edges 40, 41 of the first and of the second part 33, 34 of the activation device 32 are mutually distanced by a distance D. In addition, the first and the second part 33, 34 of the activation device 32 abut respectively on the first and on the second stroke-limiting element 37, 42. The locking of the quick release coupling is described below 1.

To stably engage the fitting 2 to the quick release couplings 1, the fitting 2 is positioned within the second portion 5 of the tubular body 3 (see Figure 3) bearing on the washer 12. In this intermediate configuration between the first configuration and the second configuration of the quick release coupling 1, the engagement edges 40, 41 of the first and of the second part 33, 34 of the activation device 32 still have a respective distance equal to D and the first and the second part 33, 34 of the activation device 32 externally abut respectively on the first and on the second stroke limiting element 37, 42. Moreover, in this configuration the thrust pins 31 do not act in compression on the annular element 28 and the ends 28', 28" of the annular element 28 are distanced by the first distance X (as in the first configuration).

At this point, the first and the second part 33, 34 of the activation device 32 are screwed to each other. The screwing determines a mutually approaching axial movement of the first and of the second part 33, 34 which entails the transition of the quick release coupling 1 from the first to the second configuration. This transition takes place because the axial movement of the first and of the second part 33, 34 of the activation device 32 causes the translation of the thrust surface 44 on the thrust pins 31. Being tapered, the thrust surface 44 acts on the thrust pins 31 causing their radial sliding within the radial seats 30. The sliding of the thrust pins 31 takes place in centripetal direction towards the main axis X-X and entails the compression of the open annular element 28, which locks around the fitting 2, causing its stable positioning in engagement with the quick release coupling 1 (see Figure 4). In this configuration, the ends 28', 28" of the annular element 28 are approached to each other; the second distance X1 that separates them is smaller than the first distance X.

Moreover, the screwing of the first and of the second part 33, 34, in collaboration with the action of the second spring 36 on the first portion 4, entails the deformation of the gasket 24. Since the gasket 24 is bound between the first portion 4 of the tubular body 3 and the abutment element 22, the gasket 24 is compressed axially and pressed radially against the outer surface of the fitting 2. For example, Figure 4 shows the deformed configuration of the gasket 24. The second spring 36 also enables the complete closure of the quick release couplings 1 to reduce to zero the distance D between engagement edges 40, 41 of the first and of the second part 33, 34 of the activation device 32 (see, in fact, Figure 4, where the engagement edges abut against each other). Through the reduction of the distance D to zero, the attainment of the second configuration of the quick release coupling 1 is recognisable by an operator also visually. The second spring 36 then exerts the axial compression necessary to determine the complete mechanical and hermetic seal of the quick release coupling 1. Advantageously, the second spring 36 cooperates with the other components of the quick release coupling 1 enable the closure of the quick release couplings 1 even as the tolerances of the outer diameter of the smooth fittings change. As the outer diameter of the fittings changes, in fact, the second spring 36 always exerts the necessary axial compression force, imparting thrust on the first portion 4. This thrusting action axially compresses the gasket 24 pressing it radially against the outer surface of the terminal 2 and also causes the open annular element 28 to close around the fitting.

At this point, to separate the fitting 2 from the quick release coupling, it is sufficient to unscrew the two parts 33, 34 relative to each other and to extract the fitting 2 from the quick release coupling 1.

## Claims

1. A quick release coupling (1) for smooth or threaded fittings, which comprises:
- a tubular body (3) which delimits internally a passage duct (11) for a fluid and which has a first end (6) configured to be connected to a circuit and a second end (7) configured to be removably connected to a fitting (2),
- at least one clamp (27) which is functionally engaged with the tubular body (3), said clamp (27) operating between at least one first position of disengagement from the fitting (2) in which it does not axially bind the fitting (2) and a second position of coupling to the fitting (2) in which it is tightened on, and axially binds, the fitting (2) to the tubular body (3), said at least one clamp (27) comprising an open annular element (28), wherein said open annular element (28) is radially elastically deformable and/or flexible,
- a plurality of thrust pins (31), each thrust pin (31) operating in contact with a respective portion of the open annular element (28), the thrust pins (31) being accommodated at respective radial seats (30) of the tubular body (3) and being configured to slide radially within said seats (30), the thrust pins (31) being furthermore configured to cause the transition of the clamp (27) between the first position and the second position, the transition of the clamp (27) between the first position and the second position causing a radial compression of the open annular element (28),
- an activation device (32) which is configured to operate on said plurality of thrust pins (31) so as to cause the transition of the clamp (27) between the first position and the second position;
wherein the open annular element (28) is a split ring, i.e. a ring having a circumferential development of less than 360° to form a sort of "C", and wherein the thrust pins (31) are configured to radially compress the open annular element (28);
wherein the tubular body (3) is at least partially positioned within the activation device (32);
wherein said activation device (32) comprises a tapered thrust surface (44) which extends circumferentially around the open annular element (28), said activation device (32) and the tubular body (3) being configured to translate axially with respect to each other, said translation causing the axial translation of the thrust surface (44) on the thrust pins (31), the sliding of the thrust pins within said seats (30), and the transition of the clamp (27) from the first position to the second position;
wherein said activation device (32) comprises a first and a second part (33, 34); the second part (34) of the activation device (32) comprising said thrust surface (44); the second part (34) of the activation device (32) and the tubular body (3) being configured to translate axially with respect to each other; the first and the second part (33, 34) of the activation device (32) being able to be moved manually with respect to each other; the relative movement between the first and the second part (33, 34) of the activation device (32) causing the sliding of the thrust pins (31) along the thrust surface (44) and the transition of the clamp (27) between the first and the second position or vice versa.

2. The quick release coupling (1) according to the preceding claim, wherein the thrust pins (31) have a tapered or rounded end (31'), said end (31') being in contact with said thrust surface (44) both in the first and in the second position of the clamp (27) and being configured to translate axially along said thrust surface (44).

3. The quick release coupling (1) according to any one of the preceding claims, wherein the tubular body (3) comprises a first and a second portion (4, 5), the quick release coupling (1) further comprising a gasket (24), in particular an o-ring; in the second position of the clamp (27) the first and the second portion (4, 5) of the tubular body (3) being brought close together and causing an axial compression of the gasket (24) and a radial contraction of the gasket (24) against an outer surface of the fitting (2).

4. The quick release coupling (1) according to any one of the preceding claims, wherein the thrust pins (31) of the plurality of thrust pins (31) are angularly equidistant around the open annular element (28).

5. The quick release coupling (1) according to any one of the preceding claims, wherein the first and the second part (33, 34) of the activation device (32) are coupled and are configured to be moved with respect to each other by screwing or unscrewing.

6. The quick release coupling (1) according to any one of the preceding claims, comprising stroke limiting elements (37, 42, 43) which are configured to prevent the axial disengagement of the activation device (32) and/or of at least one portion (4, 5) of the tubular body (3).

7. The quick release coupling (1) according to any one of the preceding claims, comprising an elastic element (36), such as a spring, which operates between a first part (33) of the activation device (32) and a first portion (4) of the tubular body (3); said elastic element (36) exerting a thrust force on the first portion (4) of the tubular body (3) in order to push it in the direction of a second portion (5) of the tubular body (3).

8. The quick release coupling (1) according to any one of the preceding claims, wherein the tubular body (3) comprises an annular seat (26) for the open annular element (28); in the first position the open annular element (28) being in contact with an inner surface of said annular seat (26), in the second position the open annular element (28) being distanced from said inner surface of the annular seat (26).

9. The quick release coupling (1) according to any one of the preceding claims, wherein the open annular element (28) is internally knurled and is configured to be engaged with a smooth fitting (2).

10. The quick release coupling (1) according to any one of the preceding claims, wherein the open annular element (28) is internally threaded and is configured to be engaged with a threaded fitting, or the open annular element (28) is internally knurled and is configured to be engaged with a smooth fitting or the open annular element (28) comprises a plurality of serrations (29) configured to grip the fitting.

11. The quick release coupling (1) according to any one of the preceding claims, wherein the open annular element (28) comprises mutually facing ends (28', 28"), distanced, in the first position of the clamp (27), by a first distance (X), wherein said first distance (X) is smaller than a diameter (DP) of the thrust pins (31) to prevent the entry of the thrust pins (31) between said mutually facing ends (28', 28").

12. The quick release coupling (1) according to any one of the preceding claims, comprising: a washer (12) engaged within the duct of a first portion (4) of the tubular body (3), the washer (12) being configured to provide an abutment to a head of the fitting; an additional elastic element (17) exerting a thrust force on the washer (12) to push it in the direction of a second portion (7) of the tubular body (3).

13. A method for making a quick release coupling (1) according to any one of the preceding claims, wherein the method comprises:
making an open annular element (28),
mounting the open annular element (28) at an annular seat (26) of the tubular body (3),
mounting the thrust pins (31) at radial seats (30) of the tubular body (3), in particular in contact with the annular element (28),
mating an activation device (32) to the tubular body (3).

## Patentansprüche

1. Schnelllösekopplung (1) für Glatt- oder Gewindefittings, welche umfasst:
- einen rohrförmigen Körper (3), welcher innen einen Durchgangskanal (11) für ein Fluid begrenzt und welcher ein erstes Ende (6), welches dazu eingerichtet ist, mit einem Kreislauf verbunden zu werden, und ein zweites Ende (7) aufweist, welches dazu eingerichtet ist, lösbar mit einem Fitting (2) verbunden zu werden,
- wenigstens eine Klemmeinrichtung (27), welche mit dem rohrförmigen Körper (3) funktionell in Eingriff gebracht ist, wobei die Klemmeinrichtung (27) zwischen wenigstens einer ersten Position einer Abkoppelung von dem Fitting (2), in welcher sie das Fitting (2) axial nicht bindet, und einer zweiten Position einer Kopplung mit dem Fitting (2) arbeitet, in welcher sie an dem Fitting (2) befestigt ist und das Fitting (2) axial an den rohrförmigen Körper (3) bindet, wobei die wenigstens eine Klemmeinrichtung (27) ein offenes ringförmiges Element (28) umfasst, wobei das offene ringförmige Element (28) radial elastisch deformierbar und/oder flexibel ist,
- eine Mehrzahl von Schubstiften (31), wobei jeder Schubstift (31) in Kontakt mit einem jeweiligen Abschnitt des offenen ringförmigen Elements (28) arbeitet, wobei die Schubstifte (31) an jeweiligen radialen Sitzen (30) des rohrförmigen Körpers (3) aufgenommen sind und dazu eingerichtet sind, radial innerhalb der Sitze (30) zu gleiten, wobei die Schubstifte (31) ferner dazu eingerichtet sind, den Übergang der Klemmeinrichtung (27) zwischen der ersten Position und der zweiten Position zu bewirken, wobei der Übergang der Klemmeinrichtung (27) zwischen der ersten Position und der zweiten Position eine radiale Kompression des offenen ringförmigen Elements (28) bewirkt,
- eine Aktivierungsvorrichtung (32), welche dazu eingerichtet ist, an der Mehrzahl von Schubstiften (31) zu arbeiten, um den Übergang der Klemmeinrichtung (27) zwischen der ersten Position und der zweiten Position zu bewirken;
wobei das offene ringförmige Element (28) ein Spaltring ist, d.h. ein Ring, welcher eine umfängliche Entwicklung von weniger als 360° aufweist, um eine Art "C" zu bilden, und wobei die Schubstifte (31) dazu eingerichtet sind, das offene ringförmige Element (28) radial zu komprimieren;
wobei der rohrförmige Körper (3) wenigstens teilweise innerhalb der Aktivierungsvorrichtung (32) positioniert ist;
wobei die Aktivierungsvorrichtung (32) eine verjüngte Schubfläche (44) umfasst, welche sich umfänglich um das offene ringförmige Element (28) erstreckt, wobei die Aktivierungsvorrichtung (32) und der rohrförmige Körper (3) dazu eingerichtet sind, sich axial zueinander zu verschieben, wobei die Verschiebung die axiale Verschiebung der Schubfläche (44) an den Schubstiften (31), das Gleiten der Schubstifte innerhalb der Sitze (30), und die Verschiebung der Klemmeinrichtung (27) von der ersten Position in die zweite Position bewirkt;
wobei die Aktivierungsvorrichtung (32) einen ersten und einen zweiten Teil (33, 34) umfasst; wobei der zweite Teil (34) der Aktivierungsvorrichtung (32) die Schubfläche (44) umfasst; wobei der zweite Teil (34) der Aktivierungsvorrichtung (32) und der rohrförmige Körper dazu eingerichtet sind, sich axial zueinander zu verschieben; wobei der erste und der zweite Teil (33, 34) der Aktivierungsvorrichtung (32) dazu in der Lage sind, manuell zueinander bewegt zu werden; wobei die relative Bewegung zwischen dem ersten und dem zweiten Teil (33, 34) der Aktivierungsvorrichtung (32) das Gleiten der Schubstifte (31) entlang der Schubfläche (44) und den Übergang der Klemmeinrichtung (27) zwischen der ersten und der zweiten Position oder umgekehrt bewirkt.

2. Schnelllösekopplung (1) nach dem vorhergehenden Anspruch, wobei die Schubstifte (31) ein verjüngtes oder abgerundetes Ende (31') aufweisen, wobei das Ende (31') sowohl in der ersten als auch in der zweiten Position der Klemmeinrichtung (27) mit der Schubfläche (44) in Kontakt steht und dazu eingerichtet ist, sich axial entlang der Schubfläche (44) zu verschieben.

3. Schnelllösekopplung (1) nach einem der vorhergehenden Ansprüche, wobei der rohrförmige Körper (3) einen ersten und einen zweiten Abschnitt (4, 5) umfasst, wobei die Schnelllösekopplung (1) ferner eine Dichtung (24), insbesondere einen O-Ring, umfasst; wobei in der zweiten Position der Klemmeinrichtung (27) der erste und der zweite Abschnitt (4, 5) des rohrförmigen Körpers (3) nahe zueinander gebracht sind und eine axiale Kompression der Dichtung (24) und eine radiale Kontraktion der Dichtung (24) gegen eine äußere Fläche des Fittings (2) bewirken.

4. Schnelllösekopplung (1) nach einem der vorhergehenden Ansprüche, wobei die Schubstifte (31) der Mehrzahl von Schubstiften (31) in gleichen Winkelabständen um das offene ringförmige Element (28) angeordnet sind.

5. Schnelllösekopplung (1) nach einem der vorhergehenden Ansprüche, wobei der erste und der zweite Teil (33, 34) der Aktivierungsvorrichtung (32) gekoppelt sind und dazu eingerichtet sind, durch Anschrauben oder Abschrauben gegeneinander bewegt zu werden.

6. Schnelllösekopplung (1) nach einem der vorhergehenden Ansprüche, umfassend Hubbegrenzungselemente (37, 42, 43), welche dazu eingerichtet sind, die axiale Abkoppelung der Aktivierungsvorrichtung (32) und/oder wenigstens eines Abschnitts (4, 5) des rohrförmigen Körpers (3) zu verhindern.

7. Schnelllösekopplung (1) nach einem der vorhergehenden Ansprüche, umfassend ein elastisches Element (36), beispielsweise eine Feder, welches zwischen einem ersten Teil (33) der Aktivierungsvorrichtung (32) und einem ersten Abschnitt (4) des rohrförmigen Körpers (3) arbeitet; wobei das elastische Element (36) eine Schubkraft auf den ersten Abschnitt (4) des rohrförmigen Körpers (3) ausübt, um diesen in die Richtung eines zweiten Abschnitts (5) des rohrförmigen Körpers (3) zu drücken.

8. Schnelllösekopplung (1) nach einem der vorhergehenden Ansprüche, wobei der rohrförmige Körper (3) einen ringförmigen Sitz (26) für das offene ringförmige Element (28) umfasst; wobei das offene ringförmige Element (28) in der ersten Position mit einer inneren Fläche des ringförmigen Sitzes (26) in Kontakt steht, wobei das offene ringförmige Element (28) in der zweiten Position von der inneren Fläche des ringförmigen Sitzes (26) beabstandet ist.

9. Schnelllösekopplung (1) nach einem der vorhergehenden Ansprüche, wobei das offene ringförmige Element (28) innen gerändelt ist und dazu eingerichtet ist, mit einem glatten Fitting (2) in Eingriff zu stehen.

10. Schnelllösekopplung (1) nach einem der vorhergehenden Ansprüche, wobei das offene ringförmige Element (28) innen mit einem Gewinde versehen ist und dazu eingerichtet ist, mit einem Gewindefitting in Eingriff zu stehen, oder das offene ringförmige Element (28) innen gerändelt ist und dazu eingerichtet ist, mit einem glatten Fitting in Eingriff zu stehen, oder das offene ringförmige Element (28) eine Mehrzahl von Verzahnungen (29) aufweist, welche dazu eingerichtet sind, das Fitting zu greifen.

11. Schnelllösekopplung (1) nach einem der vorhergehenden Ansprüche, wobei das offene ringförmige Element (28) einander zugewandte Enden (28', 28") umfasst, welche in der ersten Position der Klemmeinrichtung (27) um einen ersten Abstand (X) beabstandet sind, wobei der erste Abstand (X) kleiner als ein Durchmesser (DP) der Schubstifte (31) ist, um den Eintritt der Schubstifte (31) zwischen die einander zugewandten Enden (28', 28") zu verhindern.

12. Schnelllösekopplung (1) nach einem der vorhergehenden Ansprüche, umfassend: eine Unterlegscheibe (12), welche innerhalb des Kanals eines ersten Abschnitts (4) des rohrförmigen Körpers (3) in Eingriff gebracht ist, wobei die Unterlegscheibe (12) dazu eingerichtet ist, eine Anlage an einem Kopf des Fittings bereitzustellen; wobei ein zusätzliches elastisches Element (17) eine Schubkraft auf die Unterlegscheibe (12) ausübt, um diese in die Richtung eines zweiten Abschnitts (7) des rohrförmigen Körpers (3) zu drücken.

13. Verfahren zum Herstellen einer Schnelllösekopplung (1) nach einem der vorhergehenden Ansprüche, wobei das Verfahren umfasst:
Herstellen eines offenen ringförmigen Elements (28),
Montieren des offenen ringförmigen Elements (28) an einem ringförmigen Sitz (26) des rohrförmigen Körpers (3),
Montieren der Schubstifte (31) an radialen Sitzen (30) des rohrförmigen Körpers (3), insbesondere in Kontakt mit dem ringförmigen Element (28),
Paaren einer Aktivierungsvorrichtung (32) mit dem rohrförmigen Körper (3).

## Revendications

1. Accouplement à décrochage rapide (1) pour raccords lisses ou filetés, qui comprend :
- un corps tubulaire (3) qui délimite au plan interne un conduit de passage (11) pour un liquide et qui présente une première extrémité (6) configurée pour être reliée à un circuit et une seconde extrémité (7) configurée pour être reliée de manière amovible à un raccord (2),
- au moins un étrier (27) qui est fonctionnellement engagé avec le corps tubulaire (3), ledit étrier (27) fonctionnant entre au moins une première position de désengagement du raccord (2) dans lequel il ne lie pas axialement le raccord (2) et une seconde position d'accouplement au raccord (2) dans lequel il est étroitement sur, et lie axialement, le raccord (2) au corps tubulaire (3), ledit au moins un étrier (27) comprenant un élément annulaire ouvert (28), où ledit élément annulaire ouvert (28) est radialement élastiquement déformable et/ou flexible,
- une pluralité de broches de poussée (31), chaque broche de poussée (31) fonctionnant en contact avec une partie respective de l'élément annulaire ouvert (28), les broches de poussée (31) étant logées au niveau des assises (30) radiales respectives du corps tubulaire (3) et étant configurées pour coulisser radialement à l'intérieur desdites assises (30), les broches de poussée (31) étant en outre configurées pour amener la transition de l'étrier (27) entre la première position et la seconde position, la transition de l'étrier (27) entre la première position et la seconde position amenant une compression radiale de l'élément annulaire ouvert (28),
- un dispositif d'activation (32) qui est configuré pour fonctionner sur ladite pluralité de broches de poussée (31) afin d'amener la transition de l'étrier (27) entre la première position et la seconde position ;
où l'élément annulaire ouvert (28) est un anneau partagé, c'est-à-dire un anneau ayant un développement circonférentiel inférieur à 360° pour former une sorte de « C », et où les broches de poussée (31) sont configurées pour comprimer radialement l'élément annulaire ouvert (28) ;
où le corps tubulaire (3) est au moins partiellement positionné à l'intérieur du dispositif d'activation (32) ;
où ledit dispositif d'activation (32) comprend une surface de poussée (44) inclinée qui s'étend dans la circonférence autour de l'élément annulaire ouvert (28), ledit dispositif d'activation (32) et le corps tubulaire (3) étant configurés pour effectuer axialement une translation l'un par rapport à l'autre, ladite translation amenant la translation axiale de la surface de poussée (44) sur les broches de poussée (31), le coulissement des broches de poussée à l'intérieur desdites assises (30), et la transition de l'étrier (27) depuis la première position vers la seconde position ;
où ledit dispositif d'activation (32) comprend une première et une seconde partie (33, 34) ; la seconde partie (34) du dispositif d'activation (32) comprenant ladite surface de poussée (44) ; la seconde partie (34) du dispositif d'activation (32) et le corps tubulaire (3) étant configurés pour effectuer une translation axialement l'un par rapport à l'autre ; la première et la seconde partie (33, 34) du dispositif d'activation (32) étant capables d'être déplacées manuellement l'une par rapport à l'autre ; le mouvement relatif entre la première et la seconde partie (33, 34) du dispositif d'activation (32) amenant le coulissement des broches de poussée (31) le long de la surface de poussée (44) et la transition de l'étrier (27) entre la première et la seconde position ou vice versa.

2. Accouplement à décrochage rapide (1) selon la revendication précédente, les broches de poussée (31) ayant une extrémité (31') effilée ou arrondie, ladite extrémité (31') se trouvant en contact avec ladite surface de poussée (44) à la fois dans la première et dans la seconde position de l'étrier (27) et étant configurée pour effectuer une translation axialement le long de ladite surface de poussée (44).

3. Accouplement à décrochage rapide (1) selon l'une quelconque des revendications précédentes, le corps tubulaire (3) comprenant une première et une seconde partie (4, 5), l'accouplement à décrochage rapide (1) comprenant en outre un joint statique (24), en particulier un anneau en O ; dans la seconde position de l'étrier (27) la première et la seconde partie (4, 5) du corps tubulaire (3) étant rapprochées et amenant une compression axiale du joint statique (24) et une contraction radiale du joint statique (24) contre une surface externe du raccord (2).

4. Accouplement à décrochage rapide (1) selon l'une quelconque des revendications précédentes, les broches de poussée (31) de la pluralité des broches de poussée (31) étant équidistantes de manière angulaire autour de l'élément annulaire ouvert (28).

5. Accouplement à décrochage rapide (1) selon l'une quelconque des revendications précédentes, la première et la seconde partie (33, 34) du dispositif d'activation (32) étant accouplées et étant configurées pour être déplacées l'une par rapport à l'autre par vissage ou dévissage.

6. Accouplement à décrochage rapide (1) selon l'une quelconque des revendications précédentes, comprenant des éléments de limitation de course (37, 42, 43) qui sont configurés pour empêcher le désengagement axial du dispositif d'activation (32) et/ou d'au moins une partie (4, 5) du corps tubulaire (3).

7. Accouplement à décrochage rapide (1) selon l'une quelconque des revendications précédentes, comprenant un élément élastique (36), tel qu'un ressort, qui fonctionne entre une première partie (33) du dispositif d'activation (32) et une première partie (4) du corps tubulaire (3) ; ledit élément élastique (36) exerçant une force de poussée sur la première partie (4) du corps tubulaire (3) afin de le pousser dans le sens d'une seconde partie (5) du corps tubulaire (3).

8. Accouplement à décrochage rapide (1) selon l'une quelconque des revendications précédentes, le corps tubulaire (3) comprenant une assise annulaire (26) pour l'élément annulaire ouvert (28) ; dans la première position l'élément annulaire ouvert (28) se trouvant en contact avec une surface interne de ladite assise annulaire (26), dans la seconde position l'élément annulaire ouvert (28) étant éloigné de ladite surface interne de l'assise annulaire (26).

9. Accouplement à décrochage rapide (1) selon l'une quelconque des revendications précédentes, l'élément annulaire ouvert (28) étant moleté au plan interne et étant configuré pour être engagé avec un raccord (2) lisse.

10. Accouplement à décrochage rapide (1) selon l'une quelconque des revendications précédentes, l'élément annulaire ouvert (28) étant fileté au plan interne et étant configuré pour être engagé avec le raccord fileté, ou l'élément annulaire ouvert (28) étant moleté au plan interne et étant configuré pour être engagé avec un raccord lisse ou l'élément annulaire ouvert (28) comprenant une pluralité de dentelures (29) configurées pour saisir le raccord.

11. Accouplement à décrochage rapide (1) selon l'une quelconque des revendications précédentes, l'élément annulaire ouvert (28) comprenant des extrémités se faisant mutuellement face (28', 28"), éloignées, dans la première position de l'étrier (27), d'une première distance (X), ladite première distance (X) étant inférieure à un diamètre (DP) des broches de poussée (31) pour empêcher l'entrée des broches de poussée (31) entre lesdites extrémités se faisant mutuellement face (28', 28").

12. Accouplement à décrochage rapide (1) selon l'une quelconque des revendications précédentes, comprenant : une rondelle (12) engagée à l'intérieur du conduit d'une première partie (4) du corps tubulaire (3), la rondelle (12) étant configurée pour fournir une butée à une tête du raccord ; un élément élastique additionnel (17) exerçant une force de poussée sur la rondelle (12) pour la pousser dans le sens d'une seconde partie (7) du corps tubulaire (3).

13. Procédé de fabrication d'un accouplement à décrochage rapide (1) selon l'une quelconque des revendications précédentes, le procédé comprenant :
la fabrication d'un élément annulaire ouvert (28),
le montage de l'élément annulaire ouvert (28) au niveau d'une assise annulaire (26) du corps tubulaire (3),
le montage des broches de poussée (31) au niveau des assises (30) radiales du corps tubulaire (3), en particulier en contact avec l'élément annulaire (28),
faisant correspondre un dispositif d'activation (32) avec le corps tubulaire (3).
